# EUROPÄISCHE PATENTSCHRIFT

(11) **EP 4 505 090 B1**
(45) Veröffentlichungstag und Bekanntmachung des Hinweises auf die Patenterteilung: **29.04.2026**
(21) Anmeldenummer: 23709680.5
(22) Anmeldetag: 06.03.2023
(51) Int. Cl.: F16D 3/41

(54) **KARDANGELENK MIT NOTLAUFEIGENSCHAFTEN SOWIE GELENKWELLE UND KRAFTFAHRZEUG MIT DEM KARDANGELENK**
UNIVERSAL JOINT WITH EMERGENCY RUNNING PROPERTIES AS WELL AS ARTICULATED SHAFT AND AUTOMOTIVE VEHICLE WITH THE UNIVERSAL JOINT
JOINT DE CARDAN AVEC PROPRIÉTÉS DE FONCTIONNEMENT EN CAS D'URGENCE AINSI QU'UN ARBRE DE TRANSMISSION ET UN VÉHICULE AUTOMOBILE AVEC LE JOINT DE CARDAN

(30) Priorität: 04.04.2022 DE 102022107934
(43) Veröffentlichungstag der Anmeldung: 12.02.2025
(73) Patentinhaber: Bayerische Motoren Werke Aktiengesellschaft, 80809 München (DE)
(72) Erfinder: MUELLER, Helmut, 84513 Toeging (DE); GLOCKER, Manuel, 85540 Haar (DE); JETZINGER, Markus, 81929 München (DE)
(86) Internationale Anmeldenummer: PCT/EP2023/055590
(87) Internationale Veröffentlichungsnummer: WO 2023/194016

(56) Entgegenhaltungen:
- WO-A2-01/94803
- DE-C- 232 759
- FR-A1- 2 609 124
- JP-Y1- S 489 001
- US-A- 1 695 116
- US-A- 272 339

## Beschreibung

Die vorliegende Erfindung betrifft ein Kardangelenk und eine korrespondierende Gelenkwelle sowie ein damit ausgestattetes Kraftfahrzeug.

Sogenannte Kreuz- oder Kardangelenke sowie entsprechende Gelenkwellen werden in verschiedenen Anwendungen eingesetzt, beispielsweise für Kraftfahrzeuge oder dergleichen. Dort sind die Kardangelenke oftmals hohen Belastungen ausgesetzt. Beispielsweise beschreibt die DE 10 2008 049 348 A1 eine Kreuzgelenkanordnung für eine Gelenkwelle. Die dortige Kreuzgelenkanordnung soll insbesondere auch bei Schwerlastgelenkwellen eine höchstmögliche Lebensdauer bei minimalem Bauraum gewährleisten. Dazu ist dort jeweils eine Lagervorrichtung für Zapfen eines Zapfenkreuzes in einer Gabelbohrung einer Gelenkgabel vorgesehen. Die Lagervorrichtung weist ein Axiallager und ein Radiallager für den Zapfen auf, wobei das Axiallager im Bereich der Zapfenschulter angeordnet ist. Die Gabelbohrung weist an ihrer einer Drehachse der Gelenkwelle zugewandten Seite einen Anlagebund auf, während die Zapfenschulter eine Anlagefläche aufweist. Das Axiallager ist dabei zwischen der Anlagefläche und dem Anlagebund angeordnet. Dadurch sollen ein minimaler Weg zwischen Krafteinleitung und Abstützung des Axiallagers realisiert und eine äußerste robuste Axiallagerabstützung ermöglicht werden und auf zusätzliche Anlegeborde zur Axialkraftabstützung verzichtet werden können.

Als weiteres Beispiel beschreibt auch die DE 10 2012 109 475 B4 eine Kreuzgelenkanordnung mit zwei Gelenkgabeln und vier Zapfenlageranordnungen. Letztere umfassen eine Außenhülse, die innerhalb einer Lagerbohrung der Gelenkgabeln angeordnet ist und die an einer Seite, die einer Zapfenkreuzmitte zugewandt ist, eine Stirnfläche aufweist. Weiter umfassen die Zapfenlageranordnungen eine Innenhülse, die innerhalb der Lagerbohrung angeordnet ist und die an einer der Zapfenkreuzmitte zugewandten Seite einen Ringabschnitt aufweist. Zwischen der Stirnfläche der Außenhülse und dem Ringabschnitt der Innenhülse ist dabei ein Axiallager angeordnet. Die Außenhülse ist an einer der der Zapfenkreuzmitte zugewandten Seite der Lagerbohrung axial gegen einen Gabelarm der Gelenkgabeln abgestützt. Der Ringabschnitt ist beabstandet zum Zapfenkreuz angeordnet, sodass jeweils zwischen dem Ringabschnitt der Innenhülse und dem Zapfenkreuz ein Spalt vorgesehen ist. Auf diese Weise soll bei der Kreuzgelenkanordnung ein möglichst geringer Außenrotationsdurchmesser erzielt werden, wobei eine möglichst gute Abstützung des Axiallagers realisiert werden soll.

Derartige Ausgestaltungen von Kreuz- oder Kardangelenken können für Verbesserungen in einem regulären fehlerfreien Normalbetrieb sorgen. Es kann jedoch zu Beschädigungen oder einem Versagen von Lagern, also zu einem Lagerversagen kommen. In einem solchen Fall kann sich das Zapfenkreuz relativ zu einer Gelenkgabel verschieben, indem sich einer der Zapfen in dessen Längsrichtung weiter als nominell oder spezifikationsgemäß im fehlerfreien Normalbetrieb vorgesehen in Längsrichtung des Zapfens durch die Gabelbohrung schiebt. Dadurch kann von den Bauteilen des Kardangelenks dann ein im Vergleich zu dem fehlerfreien Normalbetrieb vergrößerter Raum durchlaufen oder durchgriffen, also ein Rotationsdurchmesser des Kardangelenks vergrößert werden. Dadurch kann das Kardangelenk beispielsweise in Kontakt zu umgebenden Bauteilen kommen und dort zu weiteren Beschädigungen führen oder ein im fehlerfreien Normalbetrieb unnötig großer Freiraum um das Kardangelenk herum vorgesehen werden, was eine ineffiziente Bauraumnutzung im fehlerfreien Normalbetrieb bedeuten kann.

Die WO 01 / 94 803 A2 beschreibt ein Kardangelenk, das ein Paar von Gabeln umfasst, wobei jede Gabel durch ihre jeweiligen Wangen ausgerichtete Öffnungen aufweist, in denen ringförmige Drehstützglieder angeordnet sind. Das Kardangelenk umfasst zudem zwei Paare von gegenüberliegenden Stiften, die jeweils ein Lager aufweisen, wobei mindestens der erste Stift jedes Paares von Stiften von außen in die jeweiligen ringförmigen Drehstützglieder eingeführt werden kann. Ferner sind ein zentrales Stützelement, das die inneren Enden der jeweiligen Stifte unterstützend positioniert, und axiale Halter, die den jeweiligen ersten Stift gegen eine axiale Auswärtsverschiebung sichern, vorgesehen.

Die US 1695 116 A beschreibt ein Kardangelenk, mit einer Gabel, die Lagerhülsen an ihren Enden aufweist, Stiften, die sich durch die Lagerhülsen in Richtung zum Zentrum der Gabel erstrecken, und Gummieinsätzen zwischen den Lagerhülsen und den Stiften. Die Gummieinsätze sind mit den Lagerhülsen und den Stiften verriegelt. Ferner umfasst das Kardangelenk einen Block mit Nuten, die die Stifte aufnehmen, und Mitteln zum Klemmen der Stifte in den Nuten.

Die DE 232 759 C beschreibt eine Kreuzgelenkkupplung, in der das Kreuzstück aus einzelnen Bolzen zusammengesetzt ist. Die Bolzen sind durch ein Plattenpaar verbunden, deren Trennfuge in der Ebene des Kreuzes liegt.

Aufgabe der vorliegenden Erfindung ist es, eine Möglichkeit zur Realisierung von verbesserten Notlaufeigenschaften eines Kardangelenks im Versagensfall eines Lagers eines Zapfens in einer Gelenkgabel des Kardangelenks anzugeben.

Diese Aufgabe wird erfindungsgemäß durch die Gegenstände der unabhängigen Patentansprüche gelöst. Mögliche Ausgestaltungen und Weiterbildungen der vorliegenden Erfindung sind in den abhängigen Patentansprüchen, der Beschreibung und in den Figuren offenbart.

Das erfindungsgemäße Kreuz- oder Kardangelenk kann beispielsweise für eine Gelenkwelle oder als Teil einer Gelenkwelle vorgesehen, also ausgestaltet sein. Das erfindungsgemäße Kardangelenk weist zwei Gelenkgabeln und ein Zapfenkreuz auf. Das Zapfenkreuz weist einen Zentralkörper und vier Zapfen auf, die bzw. deren Mittellängsachsen in einer gemeinsamen Ebene in zwei senkrecht zueinander stehenden Richtungen von dem Zentralkörper nach außen hin wegragen. Dabei können der Zentralkörper und die Zapfen einteilig oder einstückig ausgebildet sein oder die Zapfen können beispielsweise in entsprechenden Aufnahmen des Zentralkörpers aufgenommen sein. Entlang einer gemeinsamen bzw. der gleichen Zapfen-Mittellängsachse angeordnete Zapfen können verschiedene Bauelemente oder Endstücke eines einzelnen durchgehenden Zapfenbauteils sein, das sich dann beispielsweise durch den Zentralkörper hindurch erstrecken kann. Die Zapfen weisen jeweils eine Lagerstelle auf, an welcher der jeweilige Zapfen in einer jeweiligen korrespondierenden Gabelbohrung der Gelenkgabeln gelagert ist. Jeden der Gelenkgabeln kann dabei zwei Gabelarme aufweisen, die auf zwei einander gegenüberliegenden Seiten des Zapfenkreuzes angeordnet sind und dort jeweils eine Gabelbohrung aufweisen, in der einer der Zapfen gelagert ist. Die Gabelbohrungen sind also Aufnahmen, die jeweils einen der Zapfen an dessen Lagerstelle ringförmig umgeben können.

In dem Kardangelenk bzw. als Teil des Kardangelenks ist neben wenigstens einem der Zapfen wenigstens eine Ausformung ausgebildet. Diese Ausformung ragt senkrecht zur Mittellängsachse des jeweiligen Zapfens über diesen hinaus. Die Ausformung weist wenigstens eine senkrecht zu der gemeinsamen Ebene stehende Anschlagfläche auf. Diese Anschlagfläche fungiert nur in einem Fehlerfall des Lagers des jeweiligen Zapfens als Anschlag zum Abstützen des Zapfenkreuzes an einer dem Zapfenkreuz zugewandten Innenseite der korrespondierenden, den jeweiligen Zapfen aufnehmenden Gelenkgabel zum Begrenzen einer Verschiebung des Zapfenkreuzes relativ zu der korrespondierenden Gelenkgabel entlang, also in Richtung der Mittellängsachse des jeweiligen Zapfens.

Die wenigstens eine Ausformung ist zumindest teilweise oder vollständig bzw. ausschließlich an dem Zapfenkreuz ausgebildet. Beispielsweise kann die wenigstens eine Ausformung an dem Zentralkörper des Zapfenkreuzes oder an oder jenseits der Zapfenschulter oder Zapfenbrüstung des jeweiligen Zapfens ausgebildet sein. Die Ausbildung der wenigstens einen Ausformung an dem Zapfenkreuz kann eine besonders einfache Fertigung ermöglichen. Zudem kann so eine durch die Ausformung bedingte zusätzliche Masse besonders nahe an einem Rotationsmittelpunkt des Kardangelenks angeordnet sein, sodass eine entsprechende zusätzliche Belastung des Kardangelenks besonders gering gehalten werden kann.

In der vorliegenden Erfindung ist eine entsprechende Ausformung zwischen und/oder neben allen Paaren von benachbarten Zapfen ausgebildet. In anderen Worten ist also zwischen allen Zapfen bzw. neben jedem Zapfen wenigstens eine jeweilige Ausformung angeordnet. Dies kann eine besonders zuverlässige Abstützung in verschiedenen Fehlersituationen, also beim Ausfall oder Versagen eines beliebigen Lagers ermöglichen.

Zudem kann auf diese Weise eine besonders symmetrische Ausgestaltung des Kardangelenks erreicht werden, was beispielsweise ein zu einer besonders guten Laufruhe im Betrieb führen oder beitragen kann.

Erfindungsgemäß ist senkrecht auf die gemeinsame Ebene gesehen, also in der Projektion in die gemeinsame Ebene entlang, also auf Höhe der Mittellängsachsen der Zapfen jeweils eine Aussparung zwischen benachbarten Ausformungen ausgebildet. Mit anderen Worten bilden die Ausformungen in der gemeinsamen Ebene also keine durchgehende Form, also etwa keinen durchgängigen Kreisring oder kein vollständiges Quadrat oder kein durchgängiges Plateau, sondern sind voneinander getrennt oder beabstandet. Somit ergibt sich also in Umfangsrichtung um eine senkrecht zu der gemeinsamen Ebene stehende Mittelquerachse des Zapfenkreuzes betrachtet ein abwechselndes oder unterbrochenes Muster aus Ausformungen und Aussparungen. Diese Aussparungen können Material und Gewicht einsparen. Zudem können die Aussparungen gegebenenfalls Freiraum für weitere Bauelemente oder Materialien oder einen Kühlluftstrom oder dergleichen schaffen bzw. bereitstellen. Zudem kann so die Anschlagfläche, die bei einem Lagerversagen als Kontaktfläche zwischen dem Zapfenkreuz und der jeweiligen Gelenkgabel fungiert, reduziert werden, was entsprechende Reibungsverluste reduzieren kann. Durch entsprechende Materialwahl der Ausformung kann dennoch eine ausreichende Festigkeit der Ausformung erreicht werden, um das Zapfenkreuz bzw. die auftretenden Kräfte oder Belastungen abzustützen.

Die Ausformung kann beispielsweise senkrecht zu der gemeinsamen Ebene, in der sich die Zapfen bzw. deren Mittellängsachsen erstrecken, also in der Projektion in diese Ebene betrachtet in einem Bereich in einem in der Ebene liegenden Winkel zwischen den Mittellängsachsen zweier zueinander benachbarter Zapfen ausgebildet sein.

Benachbarte Zapfen sind im vorliegenden Sinne Zapfen, deren Mittellängsachsen senkrecht zueinanderstehen.

Die Ausformung kann in axialer Richtung der Mittellängsachse des jeweiligen Zapfens betrachtet insbesondere vor und/oder hinter dem Lager bzw. einer entsprechenden Lagerstelle angeordnet sein.

An der Ausformung kommt es bestimmungsgemäß nur im Versagensfall eines Lagers zu einem Kontakt zwischen dem Zapfenkreuz und der korrespondierenden Gelenkgabel, deren Lager beschädigt oder ausgefallen ist, während es im fehlerfreien Normalbetrieb des Kardangelenks mit spezifikations- oder bestimmungsgemäß funktionierenden Lagern keinen solchen Kontakt, also keine Abstützung des Zapfenkreuzes an der Gelenkgabel über die Ausformung gibt.

Durch die vorliegend vorgesehene im Vergleich zu herkömmlichen Kardangelenken zusätzliche Ausformung kann im Fehlerfall eines Lagers der Umfang, also das Ausmaß der relativen Beweglichkeit zwischen Zapfenkreuz und Gelenkgabel begrenzt oder reduziert werden, damit der Zapfen bzw. das Zapfenkreuz in einem solchen Fall nicht zu weit durch die Gabelbohrung der Gabel hindurchrutscht oder hindurchgedrückt wird. Somit kann ohne Veränderung oder Beeinträchtigung der Laufeigenschaften des Kardangelenks im fehlerfreien Normalbetrieb eine Vergrößerung des Raumvolumens, das im Fehlerfall, also mit fehlerhaftem, ausgefallenem oder zerstörtem Lager von dem Kardangelenk durchgriffen oder durchlaufen wird, vermieden oder reduziert werden. Somit kann durch die vorliegende Erfindung eine effizientere oder platzsparendere Bauraumauslegung ermöglicht und eine Verbesserung der Notlaufeigenschaften des Kardangelenks bzw. der entsprechenden Gelenkwelle im Vergleich zu herkömmlichen Kardangelenken bzw. Gelenkwellen erreicht werden. Durch die reduzierte oder begrenzte relative Verschiebung des Zapfenkreuzes und der Gelenkgabeln können nicht nur Beschädigungen an umgebenden Bauteilen vermieden, sondern beispielsweise auch Unwuchten und entsprechende Momente reduziert werden. Letzteres kann die Gefahr für eine weitere oder dauerhafte Beschädigung der Gelenkwelle und/oder weiterer Lager reduzieren.

Notlaufeigenschaften des Kardangelenks sind im vorliegenden Sinne die Laufeigenschaften oder mechanischen Eigenschaften des Kardangelenks im Fehlerfall eines Lagers, also mit wenigstens einem beschädigten, ausgefallenen oder ganz oder teilweise zerstörten Lager eines Zapfens in der korrespondierenden Gabelbohrung.

In einer möglichen Ausgestaltung der vorliegenden Erfindung ist in dem fehlerfreien Normalbetrieb, in dem das Lager bestimmungs- oder spezifikationsgemäß funktioniert, im Bereich der wenigstens einen Ausformung, also im Bereich des für den Fehler- oder Versagensfall des Lagers vorgesehenen Anschlags, ein Abstand, insbesondere ein Luftspalt, vorhanden, sodass es dann als an der Ausformung bzw. dem Anschlag oder der Anschlagsfläche keinen Kontakt zwischen dem Zapfenkreuz und der Gelenkgabel gibt. Dadurch können zusätzliche Reibungsverluste an der Ausformung im fehlerfreien Normalbetrieb im Vergleich zu herkömmlichen Kardangelenk vermieden werden.

In einer weiteren möglichen Ausgestaltung der vorliegenden Erfindung ist die wenigstens eine Ausformung zumindest teilweise oder vollständig bzw. ausschließlich an dem Zentralkörper bzw. als Teil des Zentralkörpers ausgebildet sein. Die Ausbildung der wenigstens einen Ausformung an dem Zapfenkreuz kann eine besonders einfache Fertigung ermöglichen. Zudem kann so eine durch die Ausformung bedingte zusätzliche Masse besonders nahe an einem Rotationsmittelpunkt des Kardangelenks angeordnet sein, sodass eine entsprechende zusätzliche Belastung des Kardangelenks besonders gering gehalten werden kann.

In einer weiteren möglichen Ausgestaltung der vorliegenden Erfindung ist die wenigstens eine Ausformung auf beiden Seiten der gemeinsamen Ebene ausgebildet. Mit anderen Worten kann sich die Ausformung oder eine jeweilige Ausformung also in beide Richtungen senkrecht zu der gemeinsamen Ebene erstrecken. Dies ermöglicht eine bezüglich der gemeinsamen Ebene, die eine zentrale Querschnittebene des Zapfenkreuzes darstellt, symmetrische Ausgestaltung des Zapfenkreuzes. Dies kann zur Optimierung der Laufruhe des Kardangelenks beitragen und ein Verkippen des Zapfenkreuzes bzw. der Mittellängsachse des jeweiligen Zapfens, dessen Lager im Fehlerfall beschädigt oder zerstört ist, relativ zur bestimmungs- oder spezifikationsgemäßen Lage im fehlerfreien Normalbetrieb vermeiden oder reduzieren. Ein solches Verkippen könnte bei einer einseitigen Abstützung, also einer Ausbildung der Ausformung nur auf einer Seite der gemeinsamen Ebene auftreten und potenziell zu einem erhöhten Risiko für weitere Beschädigungen oder zu einer erhöhten Reibung oder einer erhöhten Laufunruhe führen. Dies kann durch die hier vorgeschlagene Ausgestaltung vermieden oder reduziert werden.

In einer weiteren möglichen Ausgestaltung der vorliegenden Erfindung ist eine erste Anschlagfläche der Ausformung senkrecht zur Mittellängsachse des ersten Zapfens ausgebildet und eine zweite Anschlagfläche der Ausformung senkrecht zur Mittellängsachse des benachbarten Zapfens, die ihrerseits senkrecht auf der Mittellängsachse des ersten Zapfens steht, ausgebildet. Dies bedeutet, dass die beiden Anschlagflächen also ebenfalls senkrecht zueinander stehen. Die Ausformung weist zwischen diesen senkrecht zueinander stehenden Anschlagflächen eine Abschrägung, also eine bezogen auf jede der beiden Anschlagflächen abgeschrägte Seite auf, die senkrecht zur Winkelhalbierenden des Winkels zwischen den Mittellängsachsen der beiden Zapfen in der gemeinsamen Ebene steht. Die Abschrägung, also die abgeschrägte Seite oder Außenseite kann also beispielsweise in einem Winkel von 45° zu jeweils einer der Anschlagflächen stehen. Die Abschrägung, also die abgeschrägte oder schräg stehende Seite steht also weder senkrecht noch parallel zu einer Mittellängsachse der Zapfen. Die hier vorgeschlagene Ausgestaltung kann insbesondere dann angewendet werden, wenn die wenigstens eine Ausformung an dem Zentralkörper des Zapfenkreuzes ausgebildet ist. Durch die hier vorgeschlagene Abschrägung kann ein besonders einfacher Einbau des Zapfenkreuzes bzw. ein besonders einfacher Zusammenbau des Kardangelenks ermöglicht werden.

In einer weiteren möglichen Ausgestaltung der vorliegenden Erfindung ist die Ausformung teilweise an der Innenseite wenigstens einer der Gelenkgabeln ausgebildet. Mit anderen Worten besteht also die Möglichkeit, die Ausformung teilweise auf Seiten des Zapfenkreuzes und teilweise auf Seiten der Gelenkgabeln auszubilden. Damit ist eine entsprechende Flexibilität hinsichtlich der Ausgestaltung des erfindungsgemäßen Kardangelenks gegeben, durch die unterschiedliche Anforderungen, beispielsweise hinsichtlich einer Fertigung, eines Bauraumbedarfs oder sonstiger Eigenschaften realisiert werden kann. Durch die teilweise Ausbildung der Ausformung an wenigstens einer der Gelenkgabeln kann für den Fall, dass nach einem Lagerversagen nur das Zapfenkreuz ausgetauscht wird, das Ersetzen von Material für die Ausformung teilweise eingespart werden. Somit kann also gegebenenfalls eine kostengünstigere Wartung oder Reparatur realisiert werden.

Durch eine jeweils teilweise Ausbildung der Ausformung an dem Zapfenkreuz oder als Teil des Zapfenkreuzes einerseits und an oder als Teil wenigstens einer der Gelenkgabeln andererseits kann besonders einfach und zuverlässig sichergestellt werden, dass im Fall eines Lagerversagens der Kontakt oder Anschlag zwischen den beiden Teilen der Ausformung in vorgesehener, bestimmungsgemäßer Weise zustande kommt bzw. erfolgt. Dadurch kann, beispielsweise durch entsprechende aufeinander abgestimmte Gestaltung und/oder Materialwahl der Teile der Ausformung, ein besonders reibungsarmer Notlaufbetrieb erreicht werden, insbesondere ohne die Eigenschaften anderer, für den fehlerfreien Normalbetrieb vorgesehener Bauteile oder Bereiche des Kardangelenks entsprechend anpassen zu müssen.

Ein weiterer Aspekt der vorliegenden Erfindung ist eine Gelenkwelle, die ein erstes Wellenstück und ein zweites Wellenstück sowie ein erfindungsgemäßes Kardangelenk aufweist, das die beiden Wellenstück miteinander koppelt. Die erfindungsgemäße Gelenkwelle kann insbesondere die im Zusammenhang mit dem erfindungsgemäßen Kardangelenk genannte Gelenkwelle sein oder dieser entsprechen. Dementsprechend kann die erfindungsgemäße Gelenkwelle einige oder alle der im Zusammenhang mit dem erfindungsgemäßen Kardangelenk genannten Eigenschaften und/oder Merkmale aufweisen.

Ein weiterer Aspekt der vorliegenden Erfindung ist ein Kraftfahrzeug, das wenigstens ein erfindungsgemäßes Kardangelenk und/oder wenigstens eine erfindungsgemäße Gelenkwelle aufweist. Das erfindungsgemäße Kraftfahrzeug kann insbesondere ein Motorrad sein, ist jedoch nicht darauf beschränkt. Ein Kraftfahrzeug kann einen besonders nützlichen Anwendungsfall für die erfindungsgemäße Gelenkwelle bzw. das erfindungsgemäße Kardangelenk darstellen, da verbesserte Notlaufeigenschaften und ein reduziertes Risiko für Beschädigungen umgebender Bauteile dazu führen kann, dass das Kraftfahrzeug auch bei einem Lagerversagen aus eigener Kraft bzw. unter eigenem Antrieb beispielsweise bis zu einer Werkstatt weiterfahren kann. Somit kann durch die vorliegende Erfindung ein verbesserter Nutzungskomfort erreicht und ein im Versagensfall anfallender Aufwand reduziert werden. Zudem kann durch die verbesserten Notlaufeigenschaften des erfindungsgemäßen Kardangelenks bzw. der erfindungsgemäßen Gelenkwelle eine Sicherheit im Betrieb des Kraftfahrzeugs verbessert werden.

Weitere Merkmale der Erfindung können sich aus den Ansprüchen, den Figuren und der Figurenbeschreibung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivdarstellung eines herkömmlichen Zapfenkreuzes für ein Kardangelenk nach dem Stand der Technik;
- Fig. 2: eine schematische Perspektivdarstellung eines verbesserten Zapfenkreuzes für ein Kardangelenk mit verbesserten Notlaufeigenschaften;
- Fig. 3: eine schematische Seitenansicht eines verbesserten Kardangelenks;
- Fig. 4: eine schematische Querschnittdarstellung eines herkömmlichen Kardangelenks nach dem Stand der Technik; und
- Fig. 5: eine schematische Querschnittdarstellung eines verbesserten Kardangelenks

In den Figuren sind gleiche und funktionsgleiche Elemente jeweils mit den gleichen Bezugszeichen versehen.

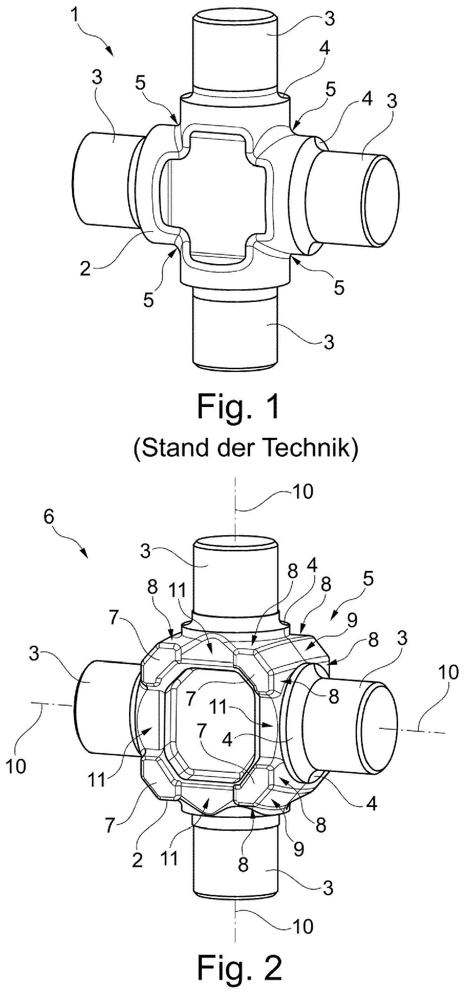

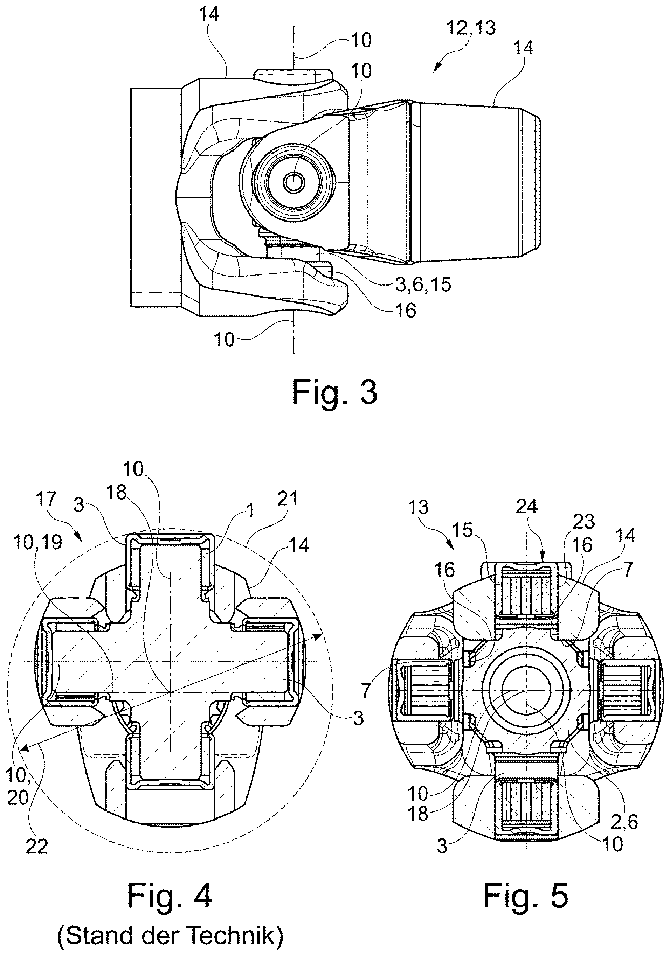

Fig. 1 zeigt eine schematische Perspektivdarstellung eines herkömmlichen Standardzapfenkreuzes 1 nach dem Stand der Technik. Das Standardzapfenkreuz 1 weist einen Zentralkörper 2 und hier von diesem wegragende Zapfen 3 auf. Die Zapfen 3 liegen dabei in einer gemeinsamen Ebene und erstrecken sich in zwei in dieser gemeinsamen Ebene liegenden senkrecht zueinander stehenden Richtungen, sodass sich eine kreuzförmige Anordnung ergibt. Die Zapfen 3 weisen jeweils einen endseitigen schmaleren Bereich und in Richtung des Mittelpunktes des Zentralkörpers 2 angeordnet eine verbreitete Zapfenbrüstung oder Zapfenschulter 4 auf. Jeweils in einem Winkel 5, also in einem Eckbereich zwischen zwei benachbarten Zapfen 3 ist der Zentralkörper 2 des Standardzapfenkreuzes 1 so weit wie möglich zurückgenommen, also minimal ausgestaltet. Dadurch kann das Standardzapfenkreuz 1 in Längsrichtung eines der Zapfen 3 durch eine jeweilige Aufnahme hindurchrutschen, beispielsweise im Falle eines Lagerversagens. Dies ist im Zusammenhang mit Fig. 4 noch näher erläutert.

Fig. 2 zeigt eine schematische Perspektivdarstellung eines gegenüber dem Standardzapfenkreuz 1 verbesserten Zapfenkreuzes 6. Auch das Zapfenkreuz 6 weist einen Zentralkörper 2 und vier von diesem in einer gemeinsamen Ebene in zwei senkrecht zueinander stehenden Richtungen wegragende Zapfen 3 auf. Bei dem Zapfenkreuz 6 weist der Zentralkörper 2 jeweils in den Winkeln 5, also zwischen zwei benachbarten Zapfen 3 bzw. in einem Übergangsbereich zwischen zwei benachbarten Zapfenschultern 4 eine Ausformung 7 auf. Diese Ausformungen 7 ragen senkrecht zu der gemeinsamen Ebene, die eine zentrale Querschnittsebene des Zapfenkreuzes 6 bildet, über die Zapfen 3 hinaus. Dadurch bilden die Ausformungen 7 jeweilige Anschläge oder Anschlagflächen 8 aus, die zumindest im Wesentlichen senkrecht zu der gemeinsamen Ebene der Zapfen 3 angeordnet oder erstreckt sind.

Im Falle eines Lagerversagens kann das Zapfenkreuz 6 dadurch nicht so weit durch eine entsprechende Aufnahme oder Zapfenlagerung eines der Zapfen 3 hindurchrutschen wie das Standardzapfenkreuz 1 bis die benachbarten Zapfen 3 an einem anderen Bauteil anschlagen. Vielmehr wird dieses Hindurchrutschen, also die Bewegung des Zapfenkreuzes 6 in Längsrichtung eines der Zapfen 3 durch die Ausformungen 7 begrenzt, nämlich nur so weit ermöglicht, bis die jeweilige senkrecht zur Bewegungsrichtung, also zur Längsrichtung eines der Zapfen 3 erstreckte Anschlagfläche 8 anschlägt, also in Kontakt mit einem anderen Bauteil kommt.

Die Ausformungen 7 sind hier mit einer jeweiligen Abschrägung 9 ausgestaltet, die schräg, insbesondere in einem von 0° und 90° verschiedenen Winkel, insbesondere in einem Winkel von 45°, zu den Anschlagflächen 8 der jeweiligen Ausformung 7 steht. Durch diese Abschrägung 9 im Bereich des jeweiligen Winkels 5 kann ein vereinfachter Einbau des Zapfenkreuzes 6 ermöglicht werden.

Zur weiteren Veranschaulichung sind hier Mittellängsachsen 10 der Zapfen 3 angedeutet. Diese Mittellängsachsen 10 liegen in der genannten gemeinsamen Ebene und schneiden sich somit im Mittelpunkt des Zapfenkreuzes 6 bzw. des Zentralkörpers 2.

Seitlich, also senkrecht zu der gemeinsamen Ebene bzw. den Mittellängsachsen 10 betrachtet sind die Ausformungen 7 auf der jeweils betrachteten Seite des Zapfenkreuzes 6 bzw. des Zentralkörpers 2 auf der Linie eines gedachten Kreises oder eines gedachten Quadrats angeordnet. Entlang dieser Linie betrachtet sind die Ausformungen 7 dabei durch dazwischenliegende Aussparungen 11 voneinander beabstandet. Die Aussparungen 11 sind jeweils im Bereich oder eines der Zapfen 3, also auf Höhe einer der Mittellängsachsen 10 angeordnet, während die Ausformungen 7 zwischen, also zwischen den Zapfen 3, das heißt in den Ecken oder Winkeln zwischen den Mittellängsachsen 10 angeordnet sind. Die Aussparungen 11 können nützlich sein, beispielsweise um Material und Gewicht einzusparen und eine Zugänglichkeit oder Führungsmöglichkeit zu schaffen. Dabei ist die dargestellte Ausgestaltung oder Anordnung jedoch beispielhaft zu verstehen, sodass ebenso andere Anordnungen oder Ausgestaltungen möglich sein können. Beispielsweise kann auf die Aussparungen 11 verzichtet werden, um die Anschlagflächen 8 zu vergrößern, es können zusätzliche Ausformungen 7 in den Aussparungen 11 und/oder zusätzliche Aussparungen 11 im Bereich der dargestellten Ausformungen 7 vorgesehen werden und/oder dergleichen mehr.

Fig. 3 zeigt eine ausschnittweise schematische Seitenansicht einer Gelenkwelle 12 mit einem entsprechend verbesserten Kardangelenk 13. Das Kardangelenk 13 umfasst hier das Zapfenkreuz 6 sowie zwei Gelenkgabeln 14. Die Gelenkgabeln 14 weisen jeweils zwei Gelenkarme auf, die auf gegenüberliegenden Seiten des Zentralkörpers 2 angeordnete Zapfen 3 aufnehmen oder halten.

In der hier dargestellten Situation mit einem Lagerversagen ist eine der Gelenkgabeln 14 entlang der in der Zeichenebene verlaufenden Mittellängsachse 10 nach oben verschoben. Dadurch ist eine Lagerstelle 15 des gegenüberliegenden Zapfens exponiert, also erkennbar.

In der hier dargestellten Ausführung weisen auch die Gelenkgabeln 14 gabelseitige Ausformungen 16 auf, welche dieselbe Aufgabe haben wie die beschriebenen Ausformungen 7 des Zapfenkreuzes 6. Beispielsweise kann die gabelseitige Ausformung 16 bei einem Lagerversagen an der korrespondierenden Anschlagfläche 8 anschlagen, also abgestützt werden, um ein weiteres Verschieben des Zapfenkreuzes 6 relativ zu den Gelenkgabeln 14 zu vermeiden.

Fig. 4 zeigt eine schematische Querschnittdarstellung eines Standardkardangelenks 17 mit einem Lagerschaden. Hier ist ein Nominalmittelpunkt 18 gekennzeichnet, in dem sich die Mittellängsachsen 10 der Zapfen 3 in einem fehlerfreien Normalbetrieb schneiden. Dies ist hier durch eine angedeutete Nominalposition 19 einer der Mittellängsachsen 10 verdeutlicht, in der die entsprechende Mittellängsachse 10 durch den Nominalmittelpunkt 18 verläuft. Demgegenüber ist in dem hier dargestellten Fehlerfall das Standardzapfenkreuz 1 entlang einer der Mittellängsachsen 10 relativ zu den Gelenkgabeln 14 verschoben, sodass die senkrecht dazu verlaufende zweite Mittellängsachse 10 sich nun in einer im Vergleich zu der Nominalposition 19 parallelverschobenen Position 20 befindet. Somit ist also das Standardzapfenkreuz 1 erheblich aus seiner bestimmungsgemäßen Position ausgelenkt. Dies führt unweigerlich dazu, dass ein hier angedeuteter Rotationsaußenkreis 21 sich vergrößert.

Der Rotationsaußenkreis 21 umfasst oder kennzeichnet dabei denjenigen Raumbereich, der bei einer Rotation des Standardkardangelenks 17 um dessen Drehachse, die hier senkrecht zur Zeichenebene steht, durchläuft oder überstreicht. Durch das Verschieben des Standardzapfenkreuzes 1 erhöht sich also ein Durchmesser 22 des Rotationsaußenkreis 21, sodass das Standardkardangelenk 17 in einem entsprechenden Fehlerfall mehr Raum benötigt oder in unerwünschten Kontakt mit umgebenden Bauteilen kommen kann.

Durch die beschriebenen konstruktiven Maßnahmen an dem verbesserten Zapfenkreuz 6 und/oder den Gelenkgabeln 14 kann bei Versagen eines Lagers eines der Zapfen 3 der im fehlerfreien Normalbetrieb gegebene Rotationsaußenkreis 21 bzw. dessen Durchmesser 22 zumindest nahezu beibehalten oder deren Vergrößerung zumindest im Vergleich zu dem Standardkardangelenk 17 reduziert werden. Dies kann durch entsprechende Stege oder Anformungen, hier also die Ausformungen 7 und/oder die gabelseitigen Ausformungen 16, realisiert werden. Dazu zeigt Fig. 5 eine schematische Querschnittansicht des Kardangelenks 13 in einem entsprechenden Fehlerfall. Bei einer entsprechenden Schädigung oder einem Ausfall eines Lagers kann sich das Zapfenkreuz 6 dann an diesen Stegen bzw. Ausformungen 7, 16 innerhalb der Gelenkwellengabeln 14 abstützen. Somit wird dann trotz des Ausfalls oder Versagens des Lagers und der damit einhergehenden zumindest potenziellen Verschiebung des Zapfenkreuzes 6 relativ zu den Gelenkgabeln 14 der Rotationsdurchmesser des Kardangelenks 13 bzw. der entsprechenden Gelenkwelle 12 nicht oder nur geringfügig erhöht. Dadurch kann vermieden werden, dass sich der entsprechende Zapfen 3 durch die jeweilige Gabelbohrung 23 nach außen hin bewegt oder verschiebt. Mit anderen Worten kann dadurch also vermieden werden, dass ein Zapfenende 24 des entsprechenden Zapfens 3 in Kontakt zu umgebenden Bauteilen kommt und Folgeschäden verursacht.

Insgesamt zeigen die beschriebenen Beispiele wie eine Verbesserung der Notlaufeigenschaften einer Kreuz- oder Kardangelenkwelle realisiert werden kann.

### Bezugszeichenliste

- 1: Standardzapfenkreuz
- 2: Zentralkörper
- 3: Zapfen
- 4: Zapfenschulter
- 5: Winkel
- 6: Zapfenkreuz
- 7: Ausformung
- 8: Anschlagfläche
- 9: Abschrägung
- 10: Mittellängsachse
- 11: Aussparung
- 12: Gelenkwelle
- 13: Kardangelenk
- 14: Gelenkgabel
- 15: Lagerstelle
- 16: gabelseitige Ausformung
- 17: Standardkardangelenk
- 18: Nominalmittelpunkt
- 19: Nominalposition
- 20: verschobene Position
- 21: Rotationsaußenkreis
- 22: Durchmesser
- 23: Gabelbohrung
- 24: Zapfenende

## Patentansprüche

1. Kardangelenk (13), aufweisend zwei Gelenkgabeln (14) und ein Zapfenkreuz (6) mit einem Zentralkörper (2) und vier in einer gemeinsamen Ebene in zwei senkrecht zueinander stehenden Richtungen von dem Zentralkörper (2) wegragenden Zapfen (3), die jeweils eine Lagerstelle (15) aufweisen, an welcher der jeweilige Zapfen (3) in einer jeweiligen korrespondierenden Gabelbohrung (23) der Gelenkgabeln (14) gelagert ist, wobei
neben wenigstens einem der Zapfen (3) wenigstens eine Ausformung (7, 16) ausgebildet ist, die senkrecht zur Mittellängsachse (10) des jeweiligen Zapfens (3) über diesen hinausragt und wenigstens eine senkrecht zu der gemeinsamen Ebene stehende Anschlagfläche (8) aufweist, die nur in einem Fehlerfall eines Lagers des jeweiligen Zapfens (3) als Anschlag (8) zum Abstützen des Zapfenkreuzes (6) an einer dem Zapfenkreuz (6) zugewandten Innenseite der korrespondierenden Gelenkgabel (14) zum Begrenzen einer Verschiebung des Zapfenkreuzes (6) relativ zu der korrespondierenden Gelenkgabel (14) entlang der Mittellängsachse (10) des jeweiligen Zapfens (3) fungiert, die Ausformung (7) zumindest teilweise an dem Zapfenkreuz (6) ausgebildet ist und eine entsprechende Ausformung (7) zwischen und/oder neben allen benachbarten Zapfen (3) ausgebildet ist,
**dadurch gekennzeichnet, dass**
senkrecht auf die gemeinsame Ebene gesehen entlang der Mittellängsachsen (10) der Zapfen (3) jeweils eine Aussparung (11) zwischen benachbarten Ausformungen (7) ausgebildet ist.

2. Kardangelenk (13) nach Anspruch 1,
**dadurch gekennzeichnet, dass**
in einem fehlerfreien Normalbetrieb im Bereich der Ausformung (7, 16) ein Abstand, insbesondere ein Luftspalt, vorhanden ist, sodass es dann an der Ausformung keinen Kontakt zwischen dem Zapfenkreuz (6) und der Gelenkgabel (14) gibt.

3. Kardangelenk (13) nach einem der vorhergehenden Ansprüche,
**dadurch gekennzeichnet, dass**
die Ausformung (7) zumindest teilweise an dem Zentralkörper (2) des Zapfenkreuzes (6) ausgebildet ist.

4. Kardangelenk (13) nach einem der vorhergehenden Ansprüche,
**dadurch gekennzeichnet, dass**
die Ausformung (7, 16) auf beiden Seiten der gemeinsamen Ebene ausgebildet ist.

5. Kardangelenk (13) nach einem der vorhergehenden Ansprüche,
**dadurch gekennzeichnet, dass**
eine erste Anschlagfläche (8) der Ausformung (7) senkrecht zur Mittellängsachse (10) des jeweiligen Zapfens (3) ausgebildet ist, eine zweite Anschlagfläche (8) der Ausformung senkrecht zur Mittellängsachse (10) eines benachbarten Zapfens (3) ausgebildet ist und die Ausformung (7) zwischen diesen Anschlagflächen (8) eine Abschrägung (9) aufweist, die senkrecht zur Winkelhalbierenden des Winkels (5) zwischen den Mittellängsachsen (10) der beiden Zapfen (3) in der gemeinsamen Ebene steht.

6. Kardangelenk (13) nach einem der vorhergehenden Ansprüche,
**dadurch gekennzeichnet, dass**
die Ausformung (16) teilweise an der Innenseite wenigstens einer der Gelenkgabeln (14) ausgebildet ist.

7. Gelenkwelle (12), aufweisend ein erstes Wellenstück und ein zweites Wellenstück und ein Kardangelenk (13) nach einem der vorhergehenden Ansprüche, welches das erste Wellenstück und das zweite Wellenstück miteinander koppelt.

8. Kraftfahrzeug, aufweisend ein Kardangelenk (13) nach einem der Ansprüche 1 bis 6 und/oder eine Gelenkwelle (12) nach Anspruch 7.

## Claims

1. Universal joint (13), comprising two joint forks (14) and a cross piece (6) with a central body (2) and four pins (3) protruding from the central body (2) in a common plane in two directions perpendicular to each other, each having a bearing point (15) at which the respective pin (3) is mounted in a respective corresponding fork bore (23) of the joint forks (14), wherein
beside at least one of the pins (3) at least one formation (7, 16) is formed which protrudes beyond the pin perpendicular to the central longitudinal axis (10) of the respective pin (3) and has at least one stop surface (8) perpendicular to the common plane, which only in the event of a failure of a bearing of the respective pin (3) acts as a stop (8) for supporting the cross piece (6) on an inner side of the corresponding joint fork (14) facing the cross piece (6) to limit a displacement of the cross piece (6) relative to the corresponding joint fork (14) along the central longitudinal axis (10) of the respective pin (3), the formation (7) is formed at least partially on the cross piece (6) and a corresponding formation (7) is formed between and/or beside all adjacent pins (3),
**characterized in that**
when viewed perpendicularly to the common plane along the central longitudinal axes (10) of the pins (3), a recess (11) is formed between adjacent formations (7).

2. Universal joint (13) according to claim 1,
**characterized in that**
in error-free normal operation, a distance, in particular an air gap, is present in the area of the formation (7, 16), so that there is then no contact between the cross piece (6) and the joint fork (14) at the formation.

3. Universal joint (13) according to any one of the preceding claims,
**characterized in that**
the formation (7) is formed at least partially on the central body (2) of the cross piece (6).

4. Universal joint (13) according to any one of the preceding claims,
**characterized in that**
the formation (7, 16) is formed on both sides of the common plane.

5. Universal joint (13) according to any one of the preceding claims,
**characterized in that**
a first stop surface (8) of the formation (7) is formed perpendicular to the central longitudinal axis (10) of the respective pin (3), a second stop surface (8) of the formation is formed perpendicular to the central longitudinal axis (10) of an adjacent pin (3) and the formation (7) has a chamfer (9) between these stop surfaces (8) which is perpendicular to the angle bisector of the angle (5) between the central longitudinal axes (10) of the two pins (3) in the common plane.

6. Universal joint (13) according to any one of the preceding claims,
**characterized in that**
the formation (16) is formed partially on the inner side of at least one of the joint forks (14).

7. Cardan shaft (12), comprising a first shaft piece and a second shaft piece and a universal joint (13) according to any one of the preceding claims, which couples the first shaft piece and the second shaft piece to each other.

8. Motor vehicle, comprising a universal joint (13) according to any one of claims 1 to 6 and/or a cardan shaft (12) according to claim 7.

## Revendications

1. Joint de cardan (13), comprenant deux fourches d'articulation (14) et une croix de cardan (6) avec un corps central (2) et quatre tourillons (3) s'étendant dans un plan commun dans deux directions perpendiculaires l'une à l'autre à partir du corps central (2), chacun ayant un point d'appui (15) au niveau duquel le tourillon respectif (3) est monté dans un alésage de fourche correspondant (23) des fourches d'articulation (14), dans lequel
à côté d'au moins un des tourillons (3) est formée au moins une configuration (7, 16) qui dépasse au-delà de celui-ci perpendiculairement à l'axe longitudinal central (10) du tourillon respectif (3) et présente au moins une surface de butée (8) perpendiculaire au plan commun, qui sert uniquement en cas de défaillance d'un palier du tourillon respectif (3) comme butée (8) pour soutenir la croix de cardan (6) sur une face intérieure de la fourche d'articulation correspondante (14) tournée vers la croix de cardan (6) pour limiter un déplacement de la croix de cardan (6) par rapport à la fourche d'articulation correspondante (14) le long de l'axe longitudinal central (10) du tourillon respectif (3), la configuration (7) est formée au moins partiellement sur la croix de cardan (6) et une configuration correspondante (7) est formée entre et/ou à côté de tous les tourillons adjacents (3),
**caractérisé en ce que**,
vu perpendiculairement au plan commun le long des axes longitudinaux centraux (10) des tourillons (3), un évidement (11) est formé entre les configurations adjacentes (7).

2. Joint de cardan (13) selon la revendication 1,
**caractérisé en ce que**
dans un fonctionnement normal sans défaut, une distance, en particulier un espace d'air, est présente dans la zone de la configuration (7, 16), de sorte qu'il n'y a alors aucun contact entre la croix de cardan (6) et la fourche d'articulation (14) au niveau de la configuration.

3. Joint de cardan (13) selon l'une quelconque des revendications précédentes, **caractérisé en ce que**
la configuration (7) est formée au moins partiellement sur le corps central (2) de la croix de cardan (6).

4. Joint de cardan (13) selon l'une quelconque des revendications précédentes, **caractérisé en ce que**
la configuration (7, 16) est formée des deux côtés du plan commun.

5. Joint de cardan (13) selon l'une quelconque des revendications précédentes, **caractérisé en ce que**
une première surface de butée (8) de la configuration (7) est formée perpendiculairement à l'axe longitudinal central (10) du tourillon respectif (3), une deuxième surface de butée (8) de la configuration est formée perpendiculairement à l'axe longitudinal central (10) d'un tourillon adjacent (3) et la configuration (7) présente un chanfrein (9) entre ces surfaces de butée (8) qui est perpendiculaire à la bissectrice de l'angle (5) entre les axes longitudinaux centraux (10) des deux tourillons (3) dans le plan commun.

6. Joint de cardan (13) selon l'une quelconque des revendications précédentes, **caractérisé en ce que**
la configuration (16) est formée partiellement sur la face intérieure d'au moins une des fourches d'articulation (14).

7. Arbre de cardan (12), comprenant une première partie d'arbre et une seconde partie d'arbre et un joint de cardan (13) selon l'une quelconque des revendications précédentes, qui couple la première partie d'arbre et la seconde partie d'arbre l'une à l'autre.

8. Véhicule automobile, comprenant un joint de cardan (13) selon l'une quelconque des revendications 1 à 6 et/ou un arbre de cardan (12) selon la revendication 7.
